# EUROPEAN PATENT SPECIFICATION

(11) **EP 0 941 169 B1**
(45) Date of publication and mention of the grant of the patent: **05.03.2003**
(21) Application number: 97947234.7
(22) Date of filing: 26.11.1997
(51) Int. Cl.: B60N 2/28, F16D 11/00

(54) **A device for releasable attachment of objects to a mobile unit**
Verfahren zum Fixieren von lösbaren Objekten an ein mobiles Element
Dispositif reversible de fixation d'un objet à une unité mobile

(30) Priority: 26.11.1996 SE 9604353
(43) Date of publication of application: 15.09.1999
(73) Proprietor: Volvo Personvagnar AB, 405 08 Göteborg (SE)
(72) Inventor: TOLFSEN, Ulf, N-1634 Gamle Fredrikstad (NO)
(74) Representative: Mossmark, Anders
(86) International application number: PCT/SE97/01984
(87) International publication number: WO 98/023462

(56) References cited:
- FR-A- 2 680 734
- US-A- 4 762 364
- US-A- 4 936 629
- US-A- 5 183 312

## Description

### TECHNICAL FIELD:

The present invention relates to an arrangement for attachment to a mobile unit of a detachable object, said arrangement comprising two engagement members, more precisely a first engagement member which is intended to be fixedly attached to the mobile unit and a second engagement member which is intended to be fixedly attached to the detachable object, and cooperative locking members which are accomodated in both engagement members and which are readjustable between a position in which the engagement members are disengaged and a position in which the engagement members are locked and connected, said arrangement also comprising adjustment members for adjustment of the locking members between their disengagement position and their locking position.

### BACKGROUND OF THE INVENTION:

Several different applications exist for which there is a need for a simple and safe arrangement for attachment of a movable object, such as for example attachment of a child seat to a vehicle, for example a car, a bicycle, a child cart etc. The conventional method for attachment of a child seat to a vehicle is to use different straps which are fastened to a vehicle seat, or specially arranged loops in the seat or in the foot board. One problem has been that the safety level has varied to a great extent and that no rigidly fixed attachment has been obtained, which has resulted in a risk of the child seat turning over in the event of an accident. Another problem has been that the fixing points has varied from one vehicle to another, which has given rise to compromise solutions for child seat manufacturers.

A standardized solution has been suggested, which has involved a rigid fixture having four fixing points and which per se results in a safe attachment. Up to now, this standard solution has required a corresponding engagement arrangement in a child seat having four attachment points. In this regard, there is a risk that it might be difficult to accomplish a safe connection in all four points in one and the same movement. Another standardized solution has been suggested, which has involved two fixing points which in some cases require additional points of support in the form of, for example, adjustable upright members.

From, for example, the patent GB-A 2 288 328 there is previously known a releasable attachment arrangement corresponding to the preamble of claim 1, which, however, requires a linear motion as well as a rotary motion in order for a locking position to be accomplished. Furthermore, this previously known mechanism requires a comparatively large constructional height and thereby also a relatively high location of, for example, a child seat.

FR-A-2 680 734 discloses a rotatable child seat attached by means of inter alia two engagement members, which are connected by means of a bolt. The two engagement members do not provide for a detachable function but merely for the rotatability of the child seat.

### SUMMARY OF THE INVENTION:

The object of the present invention is to provide an attachment arrangement which is easy to use for attaching and detaching an object and which has a high degree of reliability, by means of which, for example, it is impossible to obtain an insufficient attachment.

Said object is obtained by means of an arrangement for releasable attachment of the type disclosed in the preamble of claim 1, said arrangement being further characterized in that both engagement members disclose cooperative guiding surfaces and support surfaces for a relative centration of the two engagement members around a joint symmetry axis, said guiding surfaces and support surfaces on the one hand being in the form of external surfaces on one of the engagement members, which forms a dome-shaped figure, and on the other hand being in the form of internal surfaces on the other engagement member, which forms a cup-shaped figure, or vice versa, and that the adjustment members are adapted for keeping the locking members in a disengagement position during a first engagement position and for keeping the locking members in a locking position during a final engagement position while the two engagement members are coupled together and the interior surfaces are in close contact with, and are centered around, the exterior surfaces.

### BRIEF DESCRIPTION OF THE DRAWINGS:

The invention will be further described in the following with an embodiment and with reference to the annexed drawings, in which
Fig. 1 is a perspective view which shows a first engagement member forming part of the attachment arrangement,
Fig. 2 is a side view of the first engagement member,
Fig. 3 is a perspective view of a second engagement member forming part of the attachment arrangement,
Fig. 4 is a cross-sectional view through the second engagement member,
Fig. 5 is a perspective view which shows the first engagement member assembled with a fixture for attachment to a vehicle seat,
Fig. 6 shows the corresponding engagement member when mounted on a vehicle seat,
Fig. 7 is a cross-sectional view which shows the two engagement members in a separated state,
Fig. 8 shows the two engagement members in a first engagement position,
Fig. 9 shows the two engagement members in a final engagement position, and
Figs. 10 and 11 shows schematically an adjustment mechanism forming part of the first engagement member.

### PREFERRED EMBODIMENT:

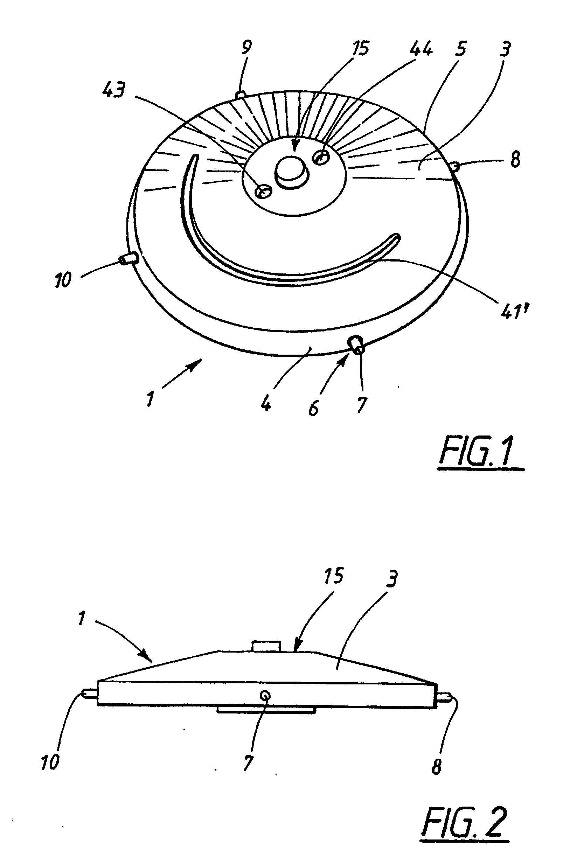

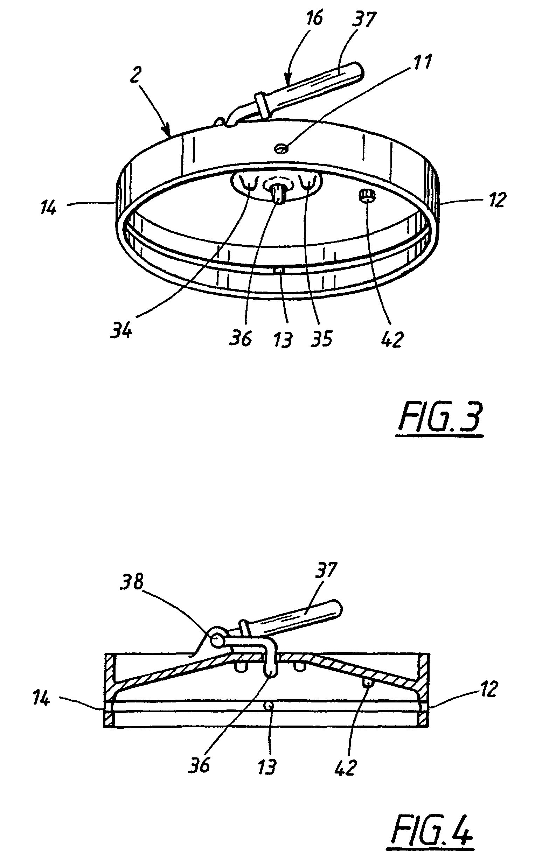

The attachment arrangement according to the present invention consists of two basic members, the principal construction of which is apparent from, among others, Figs. 1-4. The first basic member, which is shown in Figs. 1 and 2, is constituted by a first engagement member 1, which is intended to be anchored to a mobile unit, for example in a vehicle seat. The second basic member, which is shown in Figs. 3 and 4, is constituted by a second engagement member 2, which is intended to be mounted to the underside of an object which is adapted for releasable attachment and fastening to the mobile unit. The first engagement member 1 presents guiding surfaces and support surfaces 3, 4, which are intended to cooperate with corresponding surfaces in the second engagement member 2 in such a way that said second engagement member can be supported by, as well as attached to, the first engagement member in a rigid and reliable way. In the shown example, the first engagement member is designed as a raised dome-shaped section which is essentially conical with an envelope surface which forms a guiding surface as well as a support surface or bearing surface for the second engagement member 2. In order for the attachment arrangement to obtain a reasonable height overall, the cone angle is relatively small, although the cone angle can vary to a great extent, depending upon the mounting case in question. At a circumferential guiding edge 5 which runs around the engagement member and which in the shown example is circular, the conical guiding surface and support surface 3 transforms into the guiding surface and support surface 4, which in the shown example has the shape of a cylinder jacket. Alternatively, said guiding surface and support surface 4 may have the shape of a conical jacket, which increases the guiding effect.

In order to lock the engagement members 1, 2 to each other, a lock device 6 is provided, which comprises a number of locking members 7-10 which are arranged in the first engagement member 1 and which are adapted for cooperation with the locking members 11-14 in the second engagement member 2, which will be described in detail below. In order to adjust the locking members, the engagement members 1, 2 are provided with an adjustment mechanism 15, 16 for adjustment between a disengagement position, in which position the engagement members may be coupled together and separated from each other, respectively, and a locking position, in which position the engagement members may be locked to each other in a fixed relative position. The adjustment mechanism will be described in detail below.

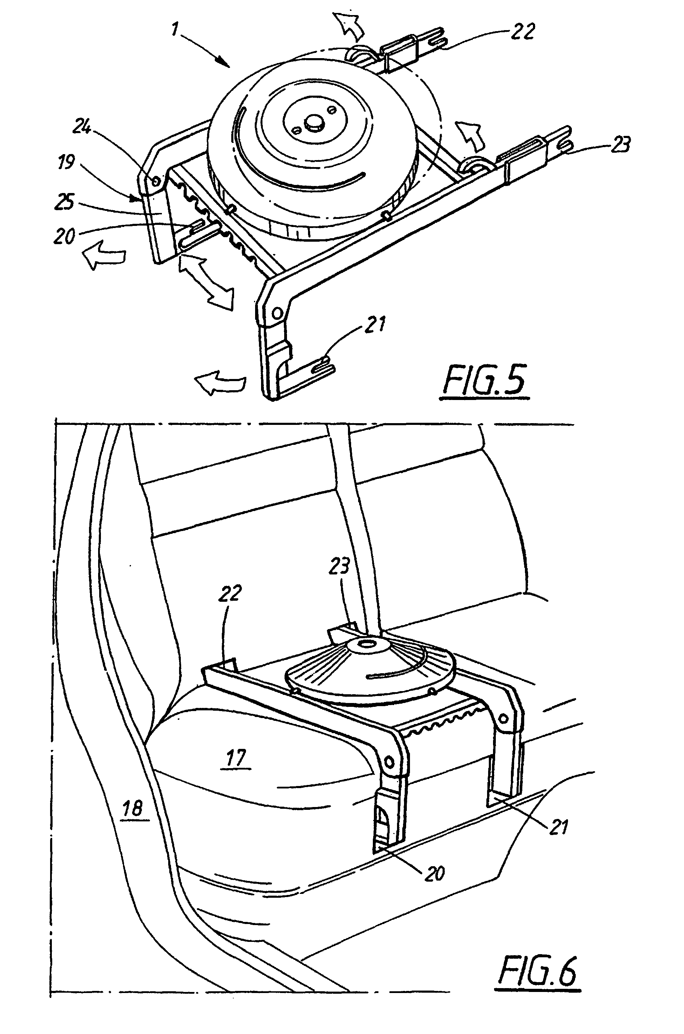

Figs. 5 and 6 show an advantageous embodiment which is adjusted to a system for attachment of, for example, a child seat in a vehicle seat 17 in a motor vehicle, for example a passenger car 18. In this regard, the engagement member 1 is arranged on a frame 19 having four fixing points 20, 21, 22, 23 in the form of, for example, hook-like, self-locking elements, which are intended to be attached to corresponding fixing points in the vehicle seat. This solution, which constitutes a fixture having four fixing points, is suggested as a standardized solution for several passenger car models, but in this case, however, it serves as an adapter, by means of which the frame with four fixing points can be permanently mounted in the vehicle seat, whereas the two engagement members 1 and 2 instead form the arrangement for releaseable attachment of the child seat to the vehicle seat. The frame 19 may be designed in several different ways. For example, it may be provided with folding links 24 which are intended to fold the frame members 25, which are protruding downwards, into a storage position. The engagement member 1 may be attached to the frame in a number of different ways, but may, for example, be attached by means of a supporting plate 26 which extends between support members and which supports the engagement member 1, or it may be attached by means of a number of cross bars. By means of a swith lever 26', the engagement member 1 is adjustable in different inclination positions in relation to the frame, which is shown in the example. In this manner, the inclination of, for example, the child seat may be individually adjusted to different inclinations of the seat.

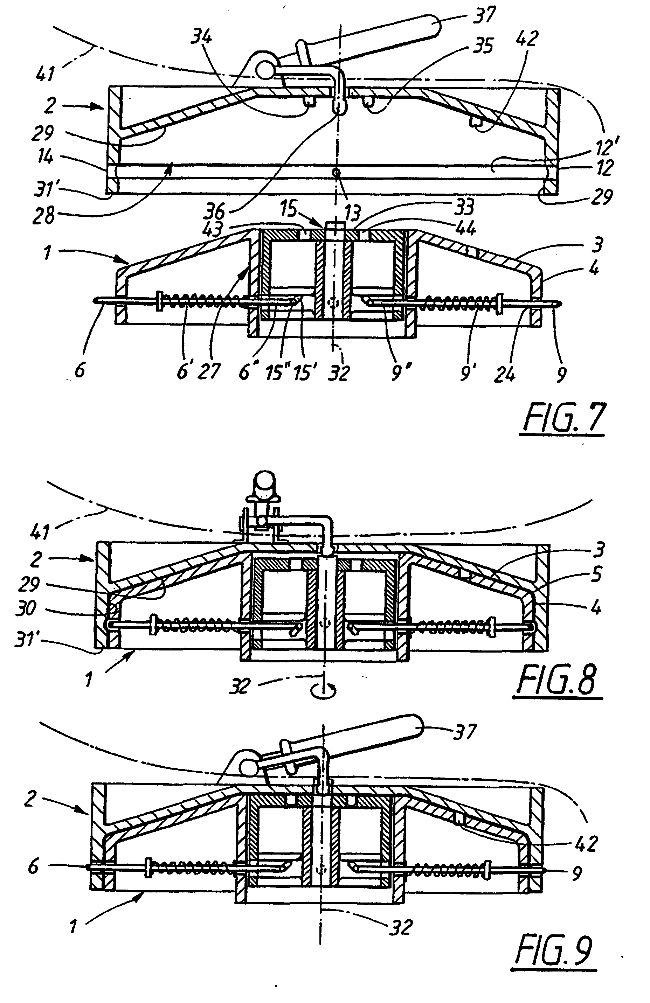

Figs. 7, 8 and 9 illustrate a more detailed example of the construction of the lock device 6 and the adjustment mechanism 15, 16, said construction being intended for adjustment between a disengagement position and a locking position.

The above-mentioned locking members 7-10 in the lock device 6 in the first engagement member 1, which in this example constitutes a lower engagement member, form sideways directed pins, which project essentially radially through openings 24 which in an unaffected initial position and also in a locking position, which will be described in detail below, pass through the cylindrical wall which forms the support surface 4 of the engagement member 1. In the shown example, the locking pins are four in number and are equally divided over the circumference of the engagement member, but the number and the placing can be varied to a great extent. The locking pins 6, 9 constitute external ends of locking bars 6', 9' which extend through holes 6'', 9'' in a stay tube 27, which projects downwards from the internal side of the engagement member 1. The guiding surfaces and support surfaces 3, 4, including the guiding edge 5, of the engagement member 1, are concentrical around a symmetry axis 32 for the engagement member 1.

As is best apparent from Figs. 7, 8 and 9, the second engagement member 2 presents an internal form which is adjusted to the external, upwardly turned dome-shaped form of the first engagement member, said internal form having an internal cup-shaped space 28, which is adapted for engagement with the external form of the engagement member 1. Thus, the engagement member 2 presents corresponding guiding surfaces and support surfaces 29, 30, which extend concentrically around a symmetry axis 32 for the engagement member 2. In the shown example, one of the guiding surfaces and support surfaces 29 is constituted by a similarly conical envelope surface, although it is, per se, sufficient that the engagement member 2 presents support surfaces which extend annularly, or supporting heads which are situated at suitable locations and at suitable heights, by means of which the engagement member 2 obtains a rigid support against the lower engagement member while said members are coupled together. The support surface 30, however, is preferably uniform with the support surface 4 in the lower engagement member, which results in a dimensional deviation which provides a suitable tolerance.

The support surface 30 is formed by a wall 31 having the shape of a cylinder jacket. The lower parts of the support surface 30 and the wall 31 are terminated by an edge 31' which runs around the engagement member and which, in the shown example, is circular and in practice forms a guiding edge for cooperation with the guiding surface 4 and the guiding edge 5 on the lower engagement member 1, which will be described in detail below. The wall 31 presents locking members 11-14 in the form of through holes, the number and the locations of which are suitably adjusted to the number and the locations of the locking pins 6-9. It is, however, possible to arrange a larger number of holes, provided that locking positions in several alternative torsional positions of the upper engagement member 2 in relation to the lower engagement member 1 is desired. As is apparent from Figs. 3 and 7, the support surface 30 presents a groove 12' which runs around the engagement member and between the holes 12, 13, 14, said groove being adapted for accommodating the locking pins 6, 9 in positions between the holes, which will be described in detail below.

The above-mentioned adjustment members 15, 16 are adapted for cooperation with the locking members 6 in such a way that it is possible to readjust said adjustment members between disengagement position and engagement position. In the shown example, the adjustment member 15 in the lower engagement member 1 is constituted by a centrally, essentially cylindrical, depressable section, said section being at least linearly movable in the longitudinal direction of the symmetry axis 32. The depressable section 15 presents a pressure plate 33 which is adapted for cooperation with code members 34, 35, which project downwards and slightly excentrically from the interior of the upper engagement member 2. In order to disengage the lock device, a centrally situated adjustment member 36 is provided, which may be raised or lowered by means of a control handle 37, which, as is best apparent from Fig. 4, is arranged in such a way that it is easily accessible from the exterior of the upper engagement member 2 and which is rotatably arranged in said upper engagement member around a link 38.

According to the invention, the adjustment member 15 on the lower engagement member is arranged in such a way, that its movement between an initial position according to Fig. 7 and a depressed position according to Fig. 8 results in an adjustment movement of the locking members 6-9 in the lower engagement member. This adjustment can be accomplished in several different ways and in the example which is shown in Figs. 7-9, it has been solved by means of oblique slits 15' in wall sections in the adjustment member. Transversal pins 15'' project into the slits 15', said transversal pins being fixedly attached to the internal ends of the locking bars 6', 9'. In this manner, the movement of the depressable section 15 is transformed in the direction of the axle 32 into a radial adjustment movement of the locking members 6, 9.

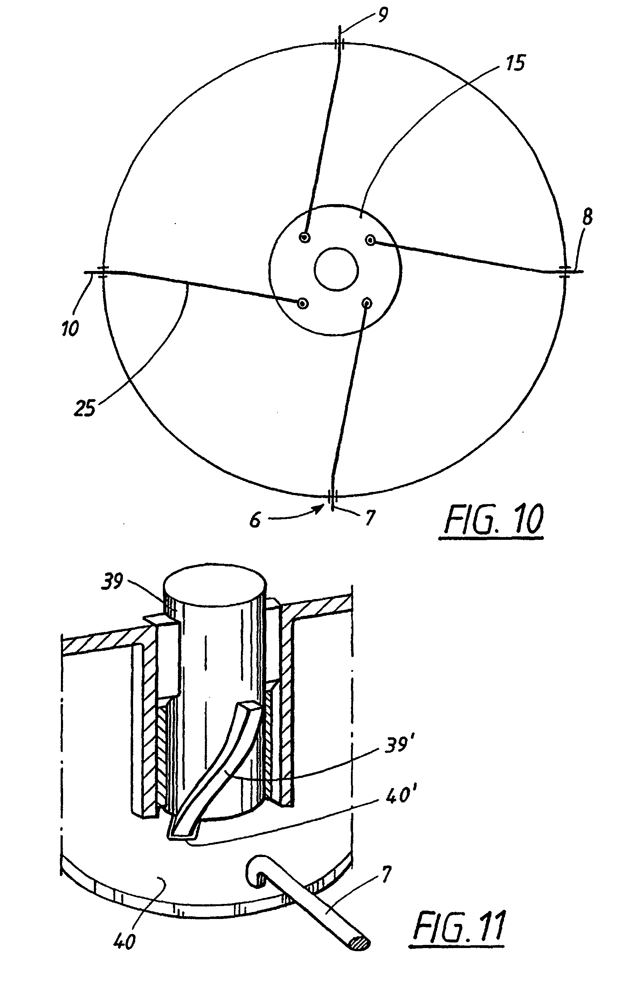

Figs. 10 and 11 show schematically an additional example of a mechanism for transmission of the movement between the adjustment member 15 and the locking members 6-9. In this example, the locking bars 25 are not entirely radially directed, but are fixed excentrically in the adjustment member 15, which consists of a push button 39 which can not be turned but which is axially movable along the symmetry axis 32, and a rotary disc 40 which can be turned around the symmetry axis. This rotary motion is accomplished by means of spiral cams 39' on the push button, said spiral cams extending through recesses 40' in the rotary disc 40.

In this regard, the code members 34, 35 of the upper engagement member are intended to depress the push button, which creates the rotaty motion of the rotary disc by means of its axial movement and thereby also a longitudinal displacement motion of the locking bars which are fixed in the rotary disc, which thereby creates the adjustment movement of the locking bars 6-9.

Apart from the above-described basic mechanisms of the locking members and the adjustment members and the code members 34, 35, the engagement members in the shown example are provided with additional code members 41', 42' (cf. Fig. 1). In the shown example, these additional code members are arranged as an arc-shaped groove 41 in the lower engagement member which is adapted for cooperation with a pilot 42, which is intended to project downwards into the groove from the interior of the upper engagement member. The arc-shaped groove has a limited angular extension, for example 180°. This provides a relative pivoting movement between the two engagement members over a limited angular interval, which, for example, makes it possible for a child seat to be situated crossways a longitudinal direction of a vehicle, followed by a rotary motion in, for example 90°, to an engagement position.

With reference to, in the first place, Figs. 7, 8 and 9, the attachment arrangement, and in which way it is used for, for example, attachment of a child seat to a car seat and in which way the child seat is released, shall now be described in a comprehensive manner. In this regard, Fig. 7 shows entirely schematically the contour of a lower section of a child seat 41, on the underside of which the upper engagement member 2 is mounted. When the child seat and the upper engagement member 2 are completely separated from the lower engagement member 1, the adjustment member 15 in the lower engagement member is located in an initial position, i.e. it is not depressed. This position is maintained by means of springs, for example pressure springs, which strive to keep the locking members 6 in a outwardly projecting position, i.e. a locking position, which also keeps the adjustment member 15 in its upper, not depressed, position.

Fig. 8 shows the two engagement members 1, 2 in a connected position, wherein the child seat is adjusted from the side in such a way that the upper engagement member 2 has been brought and centered upon the lower engagement member. By means of cooperation between, on the one hand, the guiding surfaces 3, 4 and the guiding edge 5 in the upper engagement member and, on the other hand, the guiding surfaces 29, 30 and the edge 31' in the upper engagement member, the two engagement members are forced into a rigid support position which is centered around the central axle 32. In this manner, the downwardly projecting code members 34, 35 in the upper engagement member will press against the pressure area 42 of the adjustment member 15 and thereby press said adjustment member down, by means of which the locking pins 6-9 are kept in a withdrawn position. In this regard, the locking members 6-9 are with advantage not entirely recessed in the lower engagement member 1 and are also probably not situated right in front of the holes 11-14, but project into the guiding groove 12' which runs around the engagement member. This provides a temporary locking position, in which position the upper engagement member 2 is allowed to be rotated without a risk of the arrangement turning over. After that, the child seat 41 is rotated approximately a quarter of a turn while the locking members 10 run in the guiding groove 12', whereupon the excentrically situated adjustment pins 34, 35 are allowed to project downwardly in the corresponding recesses 43, 44 when the rotary motion has resulted in that said recesses has been situated right in front Qf the pins. In this manner, the depressing action against the pressure area 33 ceases and the adjustment member 15 springs back towards its initial position (see Fig. 9). By means of the fact that the slits 15' are cooperating with the locking members 6, which in this regard are situated right in front of the corresponding openings 11-14 in the upper engagement member, the locking pins are brought to a locking position, which is due to the fact that said locking pins are inserted into the corresponding openings. In this manner, the locking pins 6-9 are synchronized to such extent that all of the locking pins are brought along in this movement. The fact that a complete locking position has been secured is with advantage indicated by means of the fact that the external ends of the locking pins 6-9 are marked with a clearly visible colour marking and that said ends protrude to such extent that they are easily observed by a user. In order to avoid the ends of the locking members to hitch onto any edge areas, said ends are with advantage slightly rounded off. Thus, if a locking pin jams or in any other way is obstructed, the locking pin will not be adjusted to a locking position.

When the two engagement members are coupled together, the attachment arrangement can be completely load carrying, wherein the arrangement manages very large retarding forces in the locking position, which provides a high safety in the event of a traffic accident.

In order to disengage the attachment arrangement, the control handle 37 is depressed into the adjustment member 16, wherein the movable adjustment pin 36 is forced to depress the adjustment member 15 via a section, which in the shown example is raised. This results in that the locking members 6-9 are recessed from locking position to disengagement position, wherein the child seat can be raised and removed. The above-mentioned groove 12', which runs circularily between the holes 11-14, provides a guiding for the locking taps also during disengagement and while the upper engagement member 2 is rotated, by means of which there is no risk of the child seat turning over during the rotary motion of approximately a quarter of a turn, which makes it easier to lift the seat through a door opening. Thus, the disengagement is executed in two steps, which can be adjusted by means of the control handle 37, which can be provided with two defined positions by means of, for example, some sort of retaining mechanism.

The above-described attachment arrangement can have several different applications. For example, other objects than child seats may be attached, such as for example a safe-deposit box in, for example, a luggage boot, an animal cage etc. The attachment arrangement may also be used for other mobile units than cars, such as for example for attachment of a child seat or a perambulator inset to a perambulator frame. By means of the attachment arrangement, a child seat may also be attached to a bicycle etc. Furthermore, the attachment arrangement may have another construction than the above-described construction. The example shows an entirely rotary symmetrical embodiment, but it is also possible to replace the conical surface with plane surfaces, such as for example a polygonal pyramid, by means of which the rotational position will be defined in a secure way.

Inversely, the cup-shaped engagement member 2 can be arranged in the frame, while the dome-shaped engagement member 1 can be turned downwards and be arranged in the releasable member.

## Claims

1. Arrangement for attachment to a mobile unit (18), for example a motor vehicle, of a detachable object (41), for example a child seat, said arrangement comprising two engagement members (1, 2), more precisely a first engagement member (1) which is intended to be fixedly attached to the mobile unit and a second engagement member (2) which is intended to be fixedly attached to the detachable object, and cooperative locking members (6-14) which are accommodated in both engagement members and which are readjustable between a position in which the engagement members are disengaged and a position in which the engagement members are locked and connected, said arrangement also comprising adjustment members (15, 16) for adjustment of the locking members between their disengagement position and their locking position, whereby both engagement members (1, 2) disclose cooperative guiding surfaces and support surfaces (3, 4, 29, 30) for a relative centration of the two engagement members around a joint symmetry axis (32), said guiding surfaces and support surfaces on the one hand being in the form of external surfaces on one of the engagement members, and on the other hand being in the form of internal surfaces on the other engagement member, **characterized in that** either engagement member forms a dome-shaped figure when the other engagement member forms a cup-shaped figure, and **in that** the adjustment members (15, 16) are adapted for keeping the locking members in a disengagement position during a first engagement position, in which position the engagement members may be coupled together and separated from each other, and for keeping the locking members in a locking position during a final engagement position while the two engagement members are coupled together and the interior surfaces are in close contact with, and are centreed around, the exterior surfaces.

2. Arrangement according to claim 1, **characterized in that** the guiding surfaces and support surfaces (3, 4, 5) of one of the engagement members (1) essentially consists of one or more surfaces (3) which are angled in relation to said symmetry axis (32), and one surface (4) which is turned away from said symmetry axis.

3. Arrangement according to claim 2, **characterized in that** the angled guiding surface and support surface (3) has the shape of a conical jacket.

4. Arrangement according to claim 2, **characterized in that** the surface (4) which is turned away from the symmetry axis (32) essentially has the shape of a cylinder jacket.

5. Arrangement according to claim 1, **characterized in that** the locking members (7-10) in one of the engagement members are constituted by one or more locking pins which are essentially radially directed away from the symmetry axis, said locking pins being adapted for projection from one of the engagement members during locking position and for engagement with the other engagement member.

6. Arrangement according to claim 5, **characterized in that** the locking members (11-14) in the other engagement member (2) are constituted by recesses in one of the guiding surfaces and support surfaces (30).

7. Arrangement according to claim 1, **characterized in that** said adjustment member (15) comprises a depressable section which is axially movable in one of the engagement members (1), said depressable section being intended to be kept depressed during said first engagement position and to return to an initial position during said final engagement position.

8. Arrangement according to claim 7, **characterized in that** said adjustment member forms part of the other engagement member (2) and that said adjustment member forms projections (34, 35) which are intended to keep the depressable section (33) depressed during the first engagement position and to be inserted into recessses (43, 44) in the depressable section during the second engagement position.

9. Arrangement according to claim 8, **characterized in that** the locking pins (7-10) are connected to the depressable section (33) in such a way that said locking pins are kept recessed into a disengagement position during their depressed position, and that said locking pins protrude in a locking position during their initial position.

10. Arrangement according to claim 7, **characterized in that** a control handle (16) is arranged in the other engagement member (2) and that said control handle forms part of the adjustment members (15, 16), said control handle being intended to be actuated in such a way that the depressable section (33) is depressed when the locking members (7-10) are in a locking position, by means of which the locking members are adjusted to a disengagement position and the engagement members (1, 2) can be separated from each other.

11. Arrangement according to claim 1, **characterized in that** said detachable object is a child seat (41) and said mobile unit is a motor vehicle (18).

12. Arrangement according to claim 11, **characterized in that** the cup-shaped engagement member (2) discloses a guiding groove (12') in one of its internal surfaces, wherein said guiding groove runs around the engagement member and is adapted for guiding the locking members (7-10) in the dome-shaped engagement member (1) and for keeping the two engagement members coupled together and for allowing rotation of the child seat (41) and the accompanying engagement member in at least a limited angle of rotation.

## Patentansprüche

1. Anordnung zur Anbringung eines entfernbaren Gegenstands (41), beispielsweise eines Kindersitzes, an einer mobilen Einheit (18), beispielsweise einem Kraftfahrzeug, wobei die Anordnung zwei Eingriffsteile (1, 2), genauer gesagt ein erstes Eingriffsteil (1), das für das feste Anbringen der mobilen Einheit vorgesehen ist, und ein zweites Eingriffsteil (2), das zur festen Anbringung an dem entfernbaren Gegenstand vorgesehen ist, und zusammenwirkende Verriegelungsteile (6 - 14) aufweist, die in den beiden Eingriffsteilen untergebracht und die zwischen einer Stellung, in der die Eingriffsteile gelöst sind, und einer Stellung, in der die Eingriffsteile verriegelt und verbunden sind, einstellbar sind, wobei die Anordnung auch Einstellelemente (15, 16) zur Einstellung der Verriegelungsteile zwischen deren Eingriffsstellung und deren Verriegelungsstellung aufweist, wobei beide Eingriffsteile (1, 2) zusammenwirkende Führungsflächen und Lagerflächen (3, 4, 29, 30) für eine relative Zentrierung der beiden Eingriffsteile um eine gemeinsame Symmetrieachse (32) aufweisen, wobei die Führungsflächen und die Lagerflächen auf der einen Seite in Form von Außenflächen auf einer der Eingriffsteile und auf der anderen Seite in Form von Innenflächen auf dem anderen Eingriffsteil vorgesehen sind, **dadurch gekennzeichnet, dass** jedes Eingriffselement eine domförmige Gestaltung bildet, wenn das andere Eingriffsteil eine napfförmige Gestaltung bildet, und dass die Einstellteile (15, 16) für das Halten der Arretierungsteile in einer getrennten Stellung während einer ersten Eingriffsstellung, in der die Eingriffsteile miteinander verbunden oder voneinander getrennt sein können, und zum Halten der Verriegelungselemente in einer Verriegelungsstellung während einer endgültigen Eingriffsstellung vorgesehen sind, während die beiden Eingriffsteile zusammengekoppelt sind und die Innenflächen in enger Berührung mit den Außenflächen und um diese herum zentriert sind.

2. Anordnung nach Anspruch 1, **dadurch gekennzeichnet, dass** die Führungsflächen und die Lagerflächen (3, 4, 5) eines der Eingriffsteile (1) im wesentlichen aus einer oder mehreren Flächen (3), die im Winkel bezüglich der Symmetrieachse (32) angeordnet sind, und einer Fläche (4) bestehen, die von der Symmetrieachse weggerichtet ist.

3. Anordnung nach Anspruch 2, **dadurch gekennzeichnet, dass** die angewinkelte Führungsfläche und die Lagerfläche (3) die Form einer konischen Verkleidung besitzen.

4. Anordnung nach Anspruch 2, **dadurch gekennzeichnet, dass** die Fläche (4), die von der Symmetrieachse (32) weggerichtet ist, im wesentlichen die Form einer zylindrischen Verkleidung aufweist.

5. Anordnung nach Anspruch 1, **dadurch gekennzeichnet, dass** die Verriegelungsteile (7 - 10) in einem der Eingriffsteile durch einen oder mehrere Verriegelungsbolzen gebildet sind, die im wesentlichen radial von der Symmetrieachse weggerichtet sind, wobei die Arretierbolzen für das Vorstehen von einem der Eingriffsteile während der Arretierungsstellung und für den Eingriff mit dem anderen Eingriffsteil vorgesehen sind.

6. Anordnung nach Anspruch 5, **dadurch gekennzeichnet, dass** die Verriegelungsteile (11 - 14) in dem anderen Eingriffsteil (2) durch Ausnehmungen in einer der Führungsflächen und Lagerflächen (30) gebildet sind.

7. Anordnung nach Anspruch 1, **dadurch gekennzeichnet, dass** das Einstellteil (15) einen niederdrückbaren Abschnitt aufweist, der in einem der Eingriffsteile (1) axial bewegbar ist, wobei der niederdrückbare Abschnitt während der ersten Eingriffsstellung gedrückt und in eine Anfangsstellung während der endgültigen Eingriffsstellung zurückgekehrt vorgesehen ist.

8. Anordnung nach Anspruch 7, **dadurch gekennzeichnet, dass** das einstellbare Teil einen Abschnitt des anderen Eingriffsteils (2) bildet und dass das Einstellteil vorstehende Anformungen (34, 35) bildet, die für das Niedergedrückthalten des niederdrückbaren Abschnitts (33) während der ersten Eingriffsstellung und für das Einsetzen in Ausnehmung (43, 44) in dem niederdrückbaren Abschnitt während der zweiten Eingriffsstellung vorgesehen sind.

9. Anordnung nach Anspruch 8, **dadurch gekennzeichnet, dass** die Arretierungsbolzen (7 - 10) mit dem niederdrückbaren Abschnitt (33) derart verbunden sind, dass die Arretierungsbolzen in einer Trennstellung während der niedergedrückten Stellung zurückgezogen verbleiben, und dass die Arretierungsstifte in einer Arretierstellung während ihrer Ausgangsstellung vorstehen.

10. Anordnung nach Anspruch 7, **dadurch gekennzeichnet, dass** eine Steuerhandhabe (16) in dem anderen Eingriffsteil (2) angeordnet ist, und dass die Steuerhandhabe einen Abschnitt der Einstellteile (15, 16) bildet, wobei die Steuerhandhabe für eine derartige Betätigung vorgesehen ist, dass der niederdrückbare Abschnitt (33) niedergedrückt ist, wenn die Arretierungsteile (7 - 10) sich in einer Arretierstellung befinden, wodurch die Arretierteile in eine Trennstellung eingestellt und die Eingriffsteile (1, 2) miteinander trennbar sind.

11. Anordnung nach Anspruch 1, **dadurch gekennzeichnet, dass** der entfernbare Gegenstand ein Kindersitz (41) ist, und dass die bewegbare Einheit ein Kraftfahrzeug (18) ist.

12. Anordnung nach Anspruch 11, **dadurch gekennzeichnet, dass** das napfförmige Eingriffsteil (2) eine Führungsnut (12') in einer seiner Innenflächen aufweist, wobei die Führungsnut um das Eingriffsteil herum verläuft und zur Führung der Arretierteile (7 - 10) in dem domförmigen Eingriffsteil (1) und zur Beibehaltung des Kupplungseingriffs der beiden Eingriffsteile und zur Drehbarkeit des Kindersitzes (41) und des begleitenden Eingriffsteils in wenigstens einem begrenzten Drehwinkel vorgesehen ist.

## Revendications

1. Ensemble de fixation à une unité mobile (18), tel qu'un véhicule à moteur, d'un objet amovible (41), par exemple un siège d'enfant, l'ensemble comprenant deux organes de coopération (1, 2) et plus précisément un premier organe de coopération (1) destiné à être fixé à l'unité mobile et un second organe de coopération (2) destiné à être fixé à l'objet amovible, et des organes coopérants de blocage (6-14) qui sont logés dans les deux organes de coopération et qui peuvent être réglables de façon répétée entre une position dans laquelle les organes de coopération sont séparés et une position dans laquelle les organes de coopération sont bloqués et raccordés, l'ensemble comprenant aussi des organes d'ajustement (15, 16) destinés à ajuster les organes de blocage entre leur position de séparation et leur position de blocage, si bien que les deux organes de coopération (1, 2) comportent des surfaces coopérantes de guidage et des surfaces de support (3, 4, 29, 30) permettant un centrage relatif des deux organes de coopération autour d'un axe (32) de symétrie du joint, les surfaces de guidage et les surfaces de support d'une part étant sous forme de surfaces externes sur l'un des organes de coopération et d'autre part étant sous forme de surfaces internes sur l'autre des organes de coopération, **caractérisé en ce que** l'un ou l'autre organe de coopération forme une configuration en dôme lorsque l'autre organe de coopération forme une configuration de cuvette, et **en ce que** les organes d'ajustement (15, 16) sont destinés à maintenir les organes de blocage en position de dégagement dans une première position de coopération dans laquelle les organes de coopération peuvent être couplés mutuellement et séparés l'un de l'autre, et destinés à maintenir les organes de blocage en position de blocage à une position de coopération finale lorsque les deux organes de coopération sont couplés et les surfaces internes sont en contact intime et sont centrées autour des surfaces extérieures.

2. Ensemble selon la revendication 1, **caractérisé en ce que** les surfaces de guidage et les surfaces de support (3, 4, 5) de l'un des organes de coopération (1) sont constituées essentiellement d'une ou plusieurs surfaces (3) formant un angle avec l'axe de symétrie (32), et une surface (4) tournée du côté opposé à l'axe de symétrie.

3. Ensemble selon la revendication 2, **caractérisé en ce que** la surface de guidage et la surface de support (3) de type incliné a la forme d'une gaine conique.

4. Ensemble selon la revendication 2, **caractérisé en ce que** la surface (4) tournée du coté opposé à l'axe de symétrie (32) a pratiquement la forme d'une gaine cylindrique.

5. Ensemble selon la revendication 1, **caractérisé en ce que** les organes de blocage (7-10) de l'un des organes de coopération sont constitués d'une ou plusieurs broches de blocage dirigées essentiellement en direction radiale du côté opposé à l'axe de symétrie, les broches de blocage étant destinées à dépasser de l'un des organes de coopération en position de blocage et à coopérer avec l'autre organe de coopération.

6. Ensemble selon la revendication 5, **caractérisé en ce que** les organes de blocage (11-14) de l'autre organe de coopération (2) sont constitués par des cavités formées dans l'uns des surfaces de guidage et des surfaces de support (30).

7. Ensemble selon la revendication 1, **caractérisé en ce que** l'organe d'ajustement (15) comporte un tronçon qui peut être enfoncé et qui est mobile axialement dans l'un des organes de coopération (1), le tronçon qui peut être enfoncé étant destiné à être maintenu enfoncé dans la première position de coopération et à revenir à une position initiale dans la position finale de coopération.

8. Ensemble selon la revendication 7, **caractérisé en ce que** l'organe d'ajustement fait partie de l'autre organe de coopération (2), et l'organe d'ajustement forme des saillies (34, 35) destinées à maintenir enfoncé le tronçon (33) qui peut être enfoncé à la première position de coopération et à être insérées dans des cavités (43, 44) formées dans le tronçon qui peut être enfoncé dans la seconde position, de coopération.

9. Ensemble selon la revendication 8, **caractérisé en ce que** les broches de blocage (7-10) sont raccordées au tronçon qui peut être enfoncé (33) de manière que les broches de blocage restent en retrait en position de dégagement dans leur position enfoncée, et les broches de blocage dépassent en position de blocage dans leur position initiale.

10. Ensemble selon la revendication 7, **caractérisé en ce qu'**une poignée de commande (16) est placée dans l'autre organe de coopération (2), et la poignée de commande fait partie des organes d'ajustement (15, 16), la poignée de commande étant destinée à être manoeuvrée de manière que le tronçon qui peut être enfoncé (33) est enfoncé lorsque les organes de blocage (7-10) sont en position de blocage, si bien que les organes de blocage sont ajustés en position de dégagement et les organes de coopération (1, 2) peuvent être séparés l'un de l'autre.

11. Ensemble selon la revendication 1, **caractérisé en ce que** l'objet amovible est un siège d'enfant (41) et l'unité mobile est un véhicule à moteur (18).

12. Ensemble selon la revendication 11, **caractérisé en ce que** l'organe de coopération (2) en forme de cuvette a une gorge de guidage (12') à l'une de ses surfaces internes, la gorge de guidage s'étendent autour de l'organe de coopération et étant destinée à guider les organes de blocage (7-10) dans l'organe de coopération en forme de dôme (1) et à maintenir couples les deux organes de coopération et à permettre la rotation du siège d'enfant (41) et de l'organe associé de coopération dans au moins une plage limitée de rotation.
